**Europäisches Patentamt**

**European Patent Office**

**Office européen des brevets**

(11) Veröffentlichungsnummer: **0 483 654 A1**

## EUROPÄISCHE PATENTANMELDUNG

(21) Anmeldenummer: **91118039.6**

(22) Anmeldetag: **23.10.91**

(51) Int. Cl.5: **C01G 1/02**

(30) Priorität: **02.11.90 DE 4034786**

(43) Veröffentlichungstag der Anmeldung:
**06.05.92 Patentblatt 92/19**

(84) Benannte Vertragsstaaten:
**BE CH DE FR GB LI**

(71) Anmelder: **MERCK PATENT GESELLSCHAFT MIT BESCHRÄNKTER HAFTUNG**
**Frankfurter Strasse 250**
**W-6100 Darmstadt(DE)**

(72) Erfinder: **Bauer, Gerd, Dr.**
**Barbarastrasse 12b**
**W-8752 Klein-Ostheim(DE)**
Erfinder: **Kuntz, Matthias, Dr.**
**Im Berggarten 16**
**W-6104 Ober-Beerbach(DE)**
Erfinder: **Grobelsek, Ingrid, Dr.**
**Adolf-Spiess-Strasse 5**
**W-6100 Darmstadt(DE)**
Erfinder: **Reyermann, Dirk**
**Heinrichstrasse 27**
**W-6100 Darmstadt(DE)**
Erfinder: **Nimtz, Günter, Prof.Dr.**
**Starenweg 34**
**W-5020 Königsdorf(DE)**

(54) **Verfahren und Vorrichtung zur Herstellung von pulverförmigen Metalloxiden für keramische Massen.**

(57) Die Erfindung betrifft ein Verfahren und eine Vorrichtung zur Umsetzung von Metallnitrat- bzw. Mischmetall-nitratlösungen zu den entsprechenden Metalloxiden im Mikrowellenfeld. Die Erfindung besteht darin, daß man zur Erzielung feiner, völlig homogen zusammengesetzter Oxidpulver, insbesondere Mischoxidpulver zur Weiter-verarbeitung für Varistorkeramiken, keramische Supraleiter und dergleichen, in dosiertem Zugabestrom so erhitzt, daß das Lösungsmittel stets innerhalb von Sekunden verdampft und das Zersetzungsprodukt als poröses, schwammartiges, rein oxidisches Material gewonnen wird, das sich leicht zu einem Pulver mit Korngrößen von 0,5 bis etwa 10 $\mu$m zerdrücken läßt. Durch die gesteuerte Zudosierung der Nitratlösung läßt sich zugleich die Reaktionstemperatur unterhalb der Pulver-Sintertemperatur einregulieren. Die Umsetzung der Nitratausgangslösung kann kontinuierlich-satzweise im Reaktionskolben stattfinden oder kontinuierlich in einem Reaktionsdrehrohr, das vorzugsweise mit Mahlkugeln beschickt ist, die gegebenenfalls einen die Umsetzung ähnlich aktivierenden Effekt ausüben, wie ihn ganz besonders der während der Reaktion entstehende Metalloxid-schwamm ausübt.

Fig. 2

## Technisches Gebiet

Die Erfindung betrifft ein Verfahren zur Herstellung von pulverförmgien Metalloxiden für keramische Massen aus Lösungen der entsprechenden Metallnitrate durch Verdampfen des Lösungsmittels (Wasser bzw. verdünnte Salpetersäure) und thermische Zersetzung des Metallnitrats bzw. von Mischungen von Metallnitraten mittels Mikrowellen. Ferner bezieht sich die Erfindung auf eine Vorrichtung zur Ausübung des Verfahrens.

Die Erfindung dient vornehmlich dem Zwecke der Herstellung von Metalloxidpulvern, insbesondere der Herstellung von pulverförmigen Gemischen von Oxiden verschiedener Metalle, zur Weiterverarbeitung zu keramischen Massen für beispielsweise Varistoren, Piezoelektrika, keramische Supraleiter, Weich-/Hartferrite, Kondensatoren, Mikrowellenfilter, keramische Sensoren, wie Sauerstoffpartialdrucksonden, und so weiter.

## Stand der Technik

Wie bekannt, hängen die Leistungsdaten der genannten Keramiken nicht nur. von der Homogenität des Gefüges der Keramik ab, sondern im Fall von Mischoxid-Keramiken ganz wesentlich auch von der Homogenität des Metalloxidgemisches für die Herstellung der Keramik. Daher ist die Verwendung von möglichst homogenen, hochfeinen und sinteraktiven Pulvern bzw. Pulvergemischen zur Herstellung keramischer Bauteile der genannten Art unverzichtbar.

Bekannt ist eine Mehrzahl von Verfahren zur Herstellung keramischer Mischoxid-Pulver, von denen die wichtigsten Verfahren nachstehend kurz erläutert werden.

Bein sogenannten Mixed-Oxide-Verfahren werden trockene Metalloxide und/oder -carbonate im gewünschten Zusammensetzungsverhältnis der herzustellenden Keramik gemischt, gegebenenfalls gemahlen und anschließend in einem Tiegel oder in einem Drehrohofen bei Temperaturen unterhalb der Sintertemperatur der vorgesehenen Keramik calciniert. Um die Sinteraktivität der nach dem Mixed-Oxide-Verfahren erhaltbaren Pulver zu verbessern, ist oftmals ein intensiver Mahlvorgang erforderlich. Dabei gelangt Abrieb der Mahlkörper in das Pulvermaterial, was zu einer Verschlechterung der mechanischen und elektrischen Eigenschaften der aus den Pulvern erhaltenen Keramiken führen kann. Um die Homogenität der Pulverkörnung und Pulvermischung zu verbessern, ist es unter Umständen erforderlich, den Mahl- und Calciniervorgang mehrmals zu wiederholen. Trotzdem lassen sich die gewünschten. Hochleistungseigenschaften der oxidischen Pulver nur in wenigen Fällen erzielen.

Den grundsätzlichen Nachteilen der Herstellung keramischer Mischoxid-Pulver aus pulverförmigen Substanzen versucht man seit jüngerer Zeit durch eine Herstellung der Oxidpulver aus Lösungen bzw. Suspensionen zu begegnen, wozu das Reaktionssprühverfahren, die Kopräzipitation , das Sol-Gel-Verfahren und die Oxid- bzw. Mischoxidherstellung im Mikrowellenfeld zur Anwendung gelangen. Die Substratausgangsformen dabei sind vorzugsweise Metallnitrate und Metallalkoxide.

Beim Reaktionssprühverfahren wird die Mischung der gelösten Komponenten in einen heißen Reaktionsraum gesprüht, in dem die Lösungströpfchen getrocknet und noch im Flug zu Oxid-Partikeln umgesetzt werden. Da die Energiezufuhr zu den Tröpfchen oder Partikeln nur langsam und von der Oberfläche her erfolgt, entstehen beim Sprühverfahren in der Regel Hohlkugeln (E. Ivers-Tiffée, K. Seitz "Characterization of Varistor-type, Raw Materials Prepared by the Evaporative Decomposition of Solution Technique", American Ceramic Bulletin 66 [9], Seiten 1384-1388 (1987)). Wenn man aus einem Pulver, das aus Hohlkugeln besteht, eine Keramik herstellt, so findet man bei Gefügeuntersuchungen einen Teil dieser Hohlräume nach dem Sintern wieder. Keramiken mit solchen Poren weisen im Vergleich zu dichtgebrannten Keramiken eine deutlich niedrigere Festigkeit auf.

Beim Kopräzipitationsverfahren fällt man aus einer Mischsalzlösung durch Anhebung des pH-Wertes, in der Regel durch Zugabe von Ammoniak, die Hydroxide der vorgelegten Metallsalze aus und verarbeitet die Hydroxidgemische zum Mischoxid-Pulver weiter. Die Schwierigkeiten des Verfahrens liegen in der aufwendigen Prozeßsteuerung (nach umfangreichen empirischen Voruntersuchungen), um ein gleichzeitiges Ausfällen der Hydroxide der unterschiedlichen Metallkationen zu erreichen. In vielen Fällen müssen für den Kopräzipitationsvorgang zum Erzielen einer ausreichend homogen zusammengesetzten Hydroxidgemisch- Ausfällung zusätzliche Maßnahmen, z. B. der Zusatz bestimmter Anionen, ergriffen werden.

Demgegenüber ist das Sol-Gel-Verfahren ein elegantes und hinsichtlich der gewünschten Produkteigenschaften zufriedenstellendes Verfahren. Dabei werden vorzugsweise Mischungen von Metall-Alkoholaten langsam hydrolisiert und anschließend einem Polykondensationsprozeß unterworfen, der das Hydrolysat in ein Gel überführt, das dann zum Metalloxidpulver calciniert wird. Die Vorteile des Sol-Gel-Verfahrens liegen, bei entsprechend sorgsamer Prozeßführung der Alkoholathydrolyse und der Polykondensation, in der homogenen Zusammensetzung des Gels und in der Feinkörnigkeit und Sinteraktivität der aus dem Gel erhaltbaren Metalloxidpulver. Besonders nachteilig sind jedoch die insbesondere durch die Rohstoffkosten bestimmten hohen Herstellungskosten derartig gewonnener Metalloxidpulver. Ein erwähnenswerter operativer Nachteil ist der niedrige Feststoffgehalt der Ausgangslösungen und der Gele zufolge der komplexen organischen Molekülreste.

Schließlich ist, wovon die vorliegende Erfindung auch ihren Ausgangspunkt nimmt, bekannt, Metalloxide bzw. Metalloxidgemische aus den entsprechenden Metallnitraten durch thermische Zersetzung mittels Mikrowellen zu gewinnen. Jedoch beschränken sich die bekannten Verfahren im wesentlichen auf das Einstoffsystem Mangan (zur Herstellung von Trockenzell-Anoden), auf die Herstellung von Mischoxiden für glasartig bzw. keramisch verstärkte Verbundstoffe oder Bauteile und auf die Herstellung von Mischoxiden des Urans und Thoriums (zur Erzeugung von Kernbrennstoffelementen), worüber je ein Beispiel gegeben wird, von denen die beiden ersten allerdings nicht von gelöstem, sondern von festem Metallnitrat ausgehen.

Nach dem JP-Patentdokument Nr. 067 946 wird festes Mangannitrat (150g ) 12 min einer pulsierenden Mikrowellenbestrahlung (2,45 GHz, 600 W) unterworfen (jeweils 15 s Bestrahlungszeit mit zwischenliegenden Pausen von 10 s) und nach 25 min Pause dieser pulsierenden Mikrowellenbestrahlung für 2 min nochmals ausgesetzt. Für die Weiterverarbeitung wird das erhaltene Mangandioxid in einer Kugelmühle fein zermahlen.

Gemäß der eine Mischung zur Herstellung von bruchbeständigem, faserverstärktem Keramikmaterial durch Mikrowellenerwärmung betreffenden DE-OS 36 11 141 erhält man ein faserverstärktes bruchfestes Keramikmaterial nachm folgendem Prinzip: Anorganische Fasern ($SiC$; $Si_3N_4$), oxidische Materialien (Glas; $Al_2O_3$; $ZrO_2$), ein festes Nitrat ($NaNO_3$; $Zr(NO_3)_4$) und ein Kopplungsvermittler (vorzugsweise Glycerin) werden gemischt und in einem hitzefesten Reaktionsgefäß (Durchmesser: 2,5 cm, Höhe: 2 cm) für 1 bis 2 h einer Mikrowellenbestrahlung (2,45 GHz) ausgesetzt, wobei sich Temperaturen um 1000°C einstellen. Die erzeugte Schmelze führt zu einem bruchfesten Keramikkörper. Die hohe Zeitdauer der Mikrowellenbestrahlung dient unter anderem einer geordneten räumlichen Orientierung der Verstärkungsfasern.

Nach der US-PS 4 444 723 erzeugt man aus Lösungen von Plutoniumnitrat oder Uranylnitrat oder Mischungen dieser Nitrate die oxidischen Materialien im Mikrowellenfeld durch Erhitzen der Lösung auf 100 bis 120°C, Eindampfen des Lösungsmittels bis zum Erhalt eines feuchten Nitratkuchens, Erhitzen des Nitratkuchens auf 350 bis 400°C zur Überführung des Metallnitrats in das Metalloxid und sich anschließendes Calcinieren des Metalloxids bei 700 bis 800°C. Die Reaktionsanordnung besteht im wesentlichen aus einem umlaufenden Endlosband mit einer Mehrzahl von offenen und drehbaren Reaktionsschalen, die wenigstens drei hintereinander angeordnete Mikrowellenkammern durchlaufen, in denen die Nitratlösung zunächst eingedampft, dann der erhaltene Nitratkuchen nach steilem Temperaturanstieg unter ständiger Temperaturkontrolle und -justierung zum Metalloxid denitriert und schließlich das erhaltene Metalloxid beim Durchlaufen von mehreren Mikrowellenkammern ebenfalls unter ständiger Temperaturmessung und -justierung zum Verfahrensprodukt calciniert wird. Die Einstellung der Temperatur der bestrahlten Materie erfolgt durch mechanische Vertikalbewegungen der auf dem Endlosband horizontal bewegten und sich drehenden Reaktionsschalen im Mikrowellenfeld.

Wenngleich die Umsetzung von Metallnitraten zu Metalloxiden im Mikrowellenfeld grundsätzlich bekannt ist, lassen sich die bekannten Verfahren nicht zur Herstellung von insbesondere Mischoxidpulvern für Hochleistungskeramiken nutzen. Einige der Gründe sind folgende:

Geht man von Trockenmischungen der Nitrate aus, sind ähnliche grundsätzliche Nachteile wie bei dem oben geschilderten Mixed-Oxide-Verfahren in Kauf zu nehmen. Desweiteren tritt der - aus der US-PS 4 444 723 ableitbare - Nachteil ein, daß trocken vorgelegte bzw. durch Eindampfen einer Nitratlösung erhaltene Nitratmassen nach Erreichen einer höheren Temperatur und damit erhöhter Ankopplungsfähigkeit für die Mikrowellen dazu neigen, sich oft unkontrollierbar schnell und unter Aufglühen zu erhitzen, was zur schnellen Sinterung des Materials führen kann. Wegen der regelmäßigen Inhomogenitäten des Mikrowellenfeldes, möglicherweise auch wegen anderer Ursachen, ist das Aufglühen häufig nur lokal begrenzt. Wird die Reaktion durch Abschaltung des Mikrowellenfeldes unterbrochen und anschließend weitergeführt, glühen dieselben Stellen wieder, während die daneben liegenden Anteile der Reaktionsmasse einen abweichenden Reaktionsverlauf nehmen. Als Folge entsprechen die Endprodukte weder hinsichtlich der Korngrößenhomogenität (falls nicht ohnehin ein Ansintern zu kompakteren Einheiten stattgefunden hat) noch hinsichtlich einer homogenen Elementenverteilung den Anforderungen an Massen bzw. Pulver zur Herstellung von Hochleistungskeramiken. Außerdem erweisen sich die Verfahrensprodukte nicht mit Sicherheit als nitratfrei.

Geht man, wie grundsätzlich in der US-PS 4 444 723 gelehrt, von größeren Ansätzen an Mischnitratlösungen aus, muß das vergleichsweise langsame Eindampfen der Mischnitratlösung wegen der unterschiedlichen Lösungseigenschaften der einzelnen Metallnitrite zu einer partiellen Entmischung der Komponenten im Niederschlag und zu einem dementsprechend inhomogen zusammengesetzten Produkt-Mischoxid führen. Weitere Entmischungsfaktoren bei größervolumigen Nitratmassen, die mittels Mikrowellen zum Mischoxid umgesetzt werden sollen, sind die ortsabhängig (an der Oberfläche und in der Tiefe) unterschiedlichen Reaktionstemperaturen und Zersetzungsgeschwindigkeiten. Im Falle eines partiellen Sinterns oder gar Verschmelzens treten weitere Mischungs- und Korninhomogenitäten auf.

Im übrigen sei erwähnt, daß die Umsetzung von festen Metallnitraten dann auf Schwierigkeiten stößt, wenn die Nitratform bei tiefen Temperaturen, z. B. Raumtemperatur, nicht in der Lage ist, an die eingestrahlten Mikrowellen anzukoppeln. Ein derartiges Metalloxid ist beispielsweise Aluminiumoxid. Soll ein derartiges Metallnitrat dennoch mittels Mikrowellen thermisch zersetzt werden, ist das Nitrat bzw. Mischnitrat entweder mittels einer thermischen Energiequelle auf die Ankopplungstemperatur aufzuheizen oder mit einem Kopplungsvermittler (etwa Glycerin, wie in der DE-OS 36 11 141 gelehrt, oder sich rückstandsfrei zersetzendes Ammoniumnitrat) zu versetzen. Geht man allerdings von wäßrigen Nitratlösungen aus, läßt sich bis auf wenige Fälle vermeiden, daß das in der Trockenform mittels der Mikrowelleneinstrahlung umzusetzende Metallnitrat bzw. -nitratgemisch die Ansprechtemperatur für das Ankoppeln der Mikrowellen noch nicht erreicht hat. Der Grund liegt darin, daß Wasser mit Mikrowellen sehr gut ankoppelt, so daß sich eine wäßrige Nitratlösung schnell erwärmt, das Lösungsmittel sich gut verdampfen läßt und das nach dem Abdampfen des Lösungsmittels kristallin angefallene Metallnitrat bei Temperaturen oberhalb von 100°C vorliegt, bei welcher Temperatur die meisten Metallnitrate gut mit den Mikrowellen in Wechselwirkung treten.

## Darstellung der Erfindung

Gegenüber dem Stand der Technik zur Herstellung von Mischoxid-Pulvern für Keramikmassen, insbesondere Hochleistungskeramikmassen, der sich im wesentlichen auf das Mixed-Oxide-Verfahren beschränkt, und unter Nutzung der von gelösten Metallnitraten ausgehenden Technik der Zersetzung von Mischmetallnitraten zu Mischmetalloxiden gemäß der US-PS 4 444 723 liegt die Aufgabe der Erfindung darin, ein universelles Verfahren und daran angepaßte Vorrichtungen zur Verfügung zu stellen, mit denen sich auf effektive Weise Metalloxidpulver, insbesondere jedoch Mischmetalloxidpulver, für Hochleistungskeramiken mit äußerst homogenen Verhältnissen der Korngröße und der Verteilung der Elemente im Mischoxidpulver preiswert und für die unmittelbare Weiterverarbeitung zur gewünschten Keramik erhalten lassen.

Ausgehend von den Grundzügen des Verfahrens gemäß der US-PS 4 444 723, nämlich dem Verdampfen des Lösungsmittels von (Misch-)Nitratlösungen und der thermischen Zersetzung des so angefallenen festen Nitrates zur oxidischen Form mittels Mikrowellen wird die Aufgabe verfahrensmäßig gemäß der kennzeichnenden Merkmale des Patentanspruchs 1 und hinsichtlich einer Vorrichtung zur kontinuierlichen Verfahrensausübung gemäß Patentanspruch 12 gelöst.

In den abhängigen Patentansprüchen 2 bis 11 sind vorteilhafte Ausgestaltungen des Verfahrens gemäß der Erfindung und in den abhängigen Ansprüchen 13 bis 15 sind vorteilhafte Ausgestaltungen der Vorrichtung zur kontinuierlichen Ausübung des Verfahrens angegeben.

Die Erfindung wird nachfolgend zunächst allgemein und dann anhand von Beispielen näher beschrieben.

Der Grundgedanke der Erfindung beruht auf der Vorstellung und der Erkenntnis, daß sich die Nachteile, die grundsätzlich bei der konventionellen Überführung von größeren Volumina an insbesondere Mischmetallnitratlösungen mittels Mikrowellen in die oxidischen Metalloxide hinzunehmen sind, nämlich einerseits die mögliche unvollkommene Umsetzung der Nitrate zu den Oxiden und andererseits das Auftreten hinsichtlich der Elementenverteilung inhomogen zusammengesetzter oxidischer Produkte, dadurch vermeiden lassen, daß man die Reaktion nicht mit dem Gesamtansatz beginnt, sondern die umzusetzende (Misch-)Nitratlösung in kleinen Portionen kontinuierlich so einsetzt, daß das Lösungsmittel der je Zeiteinheit zugesetzten Lösung schnell verdampft wird, und daß das zeitlich so in jeweils kleinen Mengen anfallende feste Metallnitrat in rascher Reaktion zum Metalloxid zersetzt wird. Verläuft die Umsetzung in der angegebenen Weise, sind Entmischungsvorgänge zufolge unterschiedlicher Metallnitratlöslichkeiten beim sozusagen spontanen Eindampfen der Ausgangslösung und weitere inhomogenisierende Effekte bei der thermischen Zersetzung des festen Mischnitrats zur oxidischen Form auszuschließen. Da bei der kontinuierlichen "Sofortumsetzung" der Nitratlösung zum entsprechenden Oxid die in den Reaktionsprozeß eingeführte frische Lösung im wesentlichen jeweils nur an die Oberfläche der zuvor gebildeten Metalloxidmasse gelangt, findet die Umsetzung des Nitrats zum Oxid praktisch als eine Oberflächenreaktion (auf der zuvor gebildeten Oxidmasse) statt und führt deswegen zur gesicherten vollständigen Überführung des Nitrats ins Oxid. Wesentlich ist, daß sich bei dieser quasi-kontinuierlichen Reaktionssteuerung ein partielles (An-) Sintern der Metalloxidmasse durch lokale, unkontrollierte Überhitzung bis hin zum Aufglühen sicher verhindern läßt.

Führt man die Reaktion in der Weise aus, daß man in einem Standgefäß, z.B. aus Duran-Glas, zunächst eine kleine Menge an Nitratlösung vorlegt und diese mittels Mikrowelleneinstrahlung bis zur Trockene einengt, wobei ein Nitratkuchen von Temperaturen um 100 bis 120 °C entsteht, und dann weiterbestrahlt, bis nitrose Gase entstanden sind, wandelt sich die Nitratmasse in vielen Fällen ohne weiteres in einen feinporösen Oxid- bzw. Nitrat-Oxid-Schwamm um, der sich bei der anschließend kontinuierlich zugegebenen weiteren Nitratlösung fortbildet und am Ende der Zugabe an Nitratlösung und deren Umsetzung als ein rein oxidisches, nitratfreies Produkt erweist. Der erkaltet entnommene Oxidschwamm läßt sich, z.B. im Achatmörser, leicht zu einem feinen Pulver zerdrücken, das unmittelbar plastifiziert und verpreßt werden kann. Im Falle von so hergestellten Mischoxidpulvern erweist sich das Material als äußerst homogen; die Elementenverteilung ist über das Gesamtprodukt völlig gleichmäßig (keine Varianz der Elementmischungsverhältnisse in Abhängigkeit etwa von der Tiefe der aus der Reaktionsmasse entnommenen Probe), und die gewonnenen Kristallite an Oxid bzw. Mischoxid weisen regelmäßig Korngrößen im Bereich von 1 bis 10 $\mu$m auf. Sollten sich zwischen den Partikeln des Endproduktes aber Festkörperbrücken ausgebildet haben, lassen sich diese durch Zerreiben, gegebenenfalls durch ein gelindes Mahlen, des Verfahrensproduktes zerstören.

Wie erkannt wurde, übt gerade die anfallende schwammartige, poröse Produktkonsistenz einen hervorragenden Einfluß auf die Umsetzung von weiterem Ausgangsmaterial auf der Schwammsubstanz aus. Sollte diese gewünschte poröse, schwammartige Konsistenz des gebildeten Metalloxids bei gewissen Metallnitraten nicht oder unvollkommen entstehen, sorgt der Zusatz einer in der Ausgangsnitratlösung lösbaren, beim Verdampfen des Lösungsmittels kristallin ausfallenden organischen Säure, z. B. Weinsäure, dafür, daß sich das oxidische Verfahrensprodukt porös und schwammartig ausbildet. Ein solcher Zusatz wirkt im übrigen beschleunigend auf die Umsetzung.

Der genannte begünstigende Einfluß des Metalloxidschwammes für die weitere Umsetzung von Metallnitratlösung zum Metalloxid beruht sicherlich auf einem thermischen Effekt und vermutlich auch auf einem Oberflächeneffekt der porösen, schwammartigen Produktmasse.

Der thermische Effekt erklärt sich daraus, daß auf der erhitzten Schwammasse die frisch zugegebene Nitratlösung unterstützt durch die Wärmeabgabe des Festmaterials nahezu spontan verdampfen kann - was durch reine Mikrowellenenergiezufuhr nicht zu ermöglichen wäre - , und daß das zwischenzeitlich anfallende Festnitrat sofort bei einer Temperatur vorliegt, die im Regelfall oberhalb der Ankopplungs-Mindesttemperatur für die Mikrowellen liegt. Aus der hohen Gesamtumsetzungsgeschwindigkeit erklärt sich auch die Gleichmäßigkeit und vor allem die Kornfeinheit der Kristallite des oxidischen Verfahrensproduktes.

Das Verfahren der Erfindung erlaubt in sehr einfacher Weise, die Verfahrensführung ohne Unterbrechung bzw. Energieveränderung des auf die Reaktionsmasse einwirkenden Mikrowellenfeldes zu steuern, indem man die Einstellung und Konstanthaltung der Substanztemperaturen im Reaktionsgefäß über den Zugabestrom an frischer Metallnitratlösung steuert. Durch ein abgewogenes Zudosieren der Frischlösung wird auch ein Aufglühen der Reaktions- bzw. Produktmasse vermieden. Im übrigen konnte festgestellt werden, daß, nachdem sich der Produktschwamm gebildet hat, die Gefahr eines Aufglühens der mikrowellenbestrahlten Substanz überhaupt gering ist, vermutlich deswegen, weil die aufgenommene Mikrowellenenergie über die enorm große Oberfläche der Schwammsubstanz leicht durch thermische Strahlung bzw. durch Konvektion abgeführt wird.

Das Verfahren gemäß der Erfindung zur Umsetzung von Metallnitratlösungen mittels Mikrowellenenergie in Metalloxidpulver läßt sich in einem Reaktionskolben, der in einem Mikrowellenresonatorraum eingeordnet ist, unter Anwendung der freigegebenen Frequenzen, beispielsweise der Frequenz von 2,45 GHz, leicht ausüben, wobei die Leistung des Mikrowellengenerators bei 500 bis 1000 Watt liegen kann.

Bei der Umsetzung im Reaktionskolben unter Anwendung von Mikrowellen von 2,45 GHz und einer Leistung des Mikrowellengenerators von 1000 Watt lassen sich beispielsweise 1000 g Mischoxidpulver in etwa 30 bis 90 min wie folgt zum gewünschten schwammartigen Endprodukt umsetzen: Es werden etwa 100 ml Nitratlösung im Kolben vorgelegt und innerhalb von etwa 5 bis 20 min bis zum Entstehen nitroser Gase und der Ausbildung einer schwammartigen Konsistenz der entstandenen Festmasse mit den Mikrowellen bestrahlt; bei aufrechterhaltener Mikrowellenstrahlung läßt man sodann den restlichen Vorrat an Nitratlösung in einer Zugabemenge zulaufen, daß das Lösungsmittel stets in wenigen Sekunden verdampft ist. Die Temperatur der entstehenden Trockenmasse liegt dabei im Bereich von 100 bis 500 °C und ist, wie gesagt, durch die Stärke des Stromes der Zugabelösung steuerbar. Die bei der Reaktion auftretenden nitrosen Gase lassen sich abfangen bzw. absaugen und gegebenenfalls durch allgemein bekannte Maßnahmen neutralisieren.

Die Reaktion gelingt jedoch auch dann, wenn man geringere Mengen an Nitratlösung vorlegt bzw. bei errichtetem Mikrowellenfeld nur eine höhere erste Zugabedosis an Nitratlösung wählt.

Anstatt das Verfahren gemäß der Erfindung in einem quasi diskontinuierlich-kontinuierlichen Satzbetrieb im Standgefäß ablaufen zu lassen, läßt es sich auch kontinuierlich ausüben, indem man den Reaktionsraum nach Art eines Drehrohrofens gestaltet und an dessen einem Ende die Nitratlösung zugibt und an dessen anderem Ende das Reaktionsprodukt (Metalloxid bzw. Mischmetalloxid) entnimmt. Dabei kann das Reaktionsrohr aus Duran- oder Quarzglas bestehen und ist in einem Mikrowellenresonatorraum eingeordnet, der seinerseits von einem strahlungsabschirmenden Gehäuse umgeben ist.

Mit Vorteil läßt sich die Verfahrensvariante der Herstellung der Metalloxide im Drehrohr bei vorhandenen Mahlkörpern mit einem kontinuierlichen leichten Mahlvorgang zur sofortigen Zerpulverung des ansonsten entstehenden Metalloxidschwamms und zur Zerstörung etwa entstandener Feststoffbrücken beim Reaktionsprodukt verbinden, wobei den Mahlkörpern außerdem eine energieübertragende Funktion entsprechend der des Metalloxidschwammes zukommt. Diese Mahlkörper, vorzugsweise in Kugelform, können beispielsweise aus Aluminiumoxid bestehen, an das Mikrowellen zwar schlecht ankoppeln, welches jedoch im Laufe der thermischen Zersetzung des Metallnitrates bzw. des Mischmetallnitrates auf die allgemeinen Reaktionstemperaturen erhitzt wird. Andererseits lassen sich zur Beschleunigung der Eindampfungs- und Umsetzungsvorgänge auch Mahlkörper aus einem Material verwenden, an das die Mikrowellen schon bei tiefen Temperaturen gut ankoppeln, so daß es sich aufgrund der Wechselwirkung mit der einfallenden Strahlung erhitzt. Ein derartiges Material ist beispielsweise Siliciumcarbid. Daraus ergibt sich der praktische Vorteil der Anwendung von Aluminiumoxid-Mahlkörpern für Nitrate, die gut ankoppeln, und von Siliciumcarbid-Mahlkörpern für Nitrate, die schlecht ankoppeln.

Der technische Gedanke des Einsatzes von Mahlkörpern aus einem Material, das seinerseits entweder gut an die Mikrowellen ankoppelt und sich dabei erhitzt, oder das nicht bis schlecht an die Mikrowellen ankoppelt und durch die Energieeinstrahlung nicht unmittelbar wesentlich erwärmt wird, läßt sich mit besonderem weiterem Vorteil in der Weise nutzen, daß man in dem Drehrohr ein Reaktionsbett aus einem Gemisch von gut und von schlecht ankoppelnden Mahlkörpern vorlegt. Der erzielbare technische Effekt ist der, daß sich je nach der Ankopplungsfähigkeit der unterschiedlichen Materialien der Mahlkörper, dem Mischungsverhältnis der Mahlkörpermaterialien und der eingestrahlten Mikrowellenenergiedichte das Reaktionsbett vor dem Reaktionsbeginn durch Bestrahlen auf ein vorbestimmbares Starttemperaturniveau bringen läßt, worauf man dann die umzusetzende Nitratlösung kontinuierlich zugibt. Darüber hinaus läßt sich bei aufeinander abgestimmtem Massenverhältnis von Mahlkörpergemisch und Reaktionsgut ein vorbestimmbares Temperaturniveau des Gemisches aus Reaktionsbett und entstandenem Produkt einstellen, das heißt, die allgemeine Reaktionstemperatur läßt sich während des Reaktionsverlaufs, insbesondere nachdem das Gleichgewicht zwischen zugeführter Ausgangsnitratlösung und abgeführtem oxidischem Reaktionsprodukt erreicht ist, besonders gut einstellen und konstant halten. Hierdurch wird eine auf die jeweilige Ausgangslösung an Metallnitrat bzw. Mischmetallnitrat abgestimmte optimale Temperaturführung in hervorragender Weise gewährleistet. Anstatt das Reaktionsbett aus Mahlkörpern zu mischen, die ihrerseits entweder aus gut oder aus schlecht an die Mikrowellen ankoppelndem Material bestehen (z.B. Mahlkörper aus Siliciumcarbid und Mahlkörper aus Aluminiumoxid), lassen sich auch Mahlkörper anwenden, die ihrerseits bereits aus einer Mischung von gut und von schlecht ankoppelnden Materialien zusammengesetzt sind. Der Einsatz von Mahlkörpern einheitlicher (koppelnder bzw. nichtkoppelnder) Zusammensetzung ist dann zu bevorzugen, wenn Interesse daran besteht, das Temperaturniveau des Reaktionsbettgemisches in bequemer Weise über das Mischungsverhältnis der an die Mikrowellen gut und schlecht ankoppelnden Mahlkörper nachzujustieren, was durch Nachdosierung von Mahlkörpern der entsprechend thermisch wirkenden Spezies zum Reaktionsbettgemisch oder durch Entnahme von Mahlkörpern der thermisch entgegengesetzt wirkenden anderen Spezies aus dem Reaktionsbettgemisch erfolgen kann. Sind die verschiedenen Mahlkörpermaterialien bereits optisch leicht zu unterscheiden, bereitet die Trennung des Reaktionsbettgemisches durch Herauslesen keinerlei besonderen Umstände; eine Trennung läßt sich ferner durch Aussieben schnell bewerkstelligen, falls Mahlkörperspezies unterschiedlichen spezifischen Durchmessers vorliegen.

Verfahrensbeispiele und Versuchsergebnisse

Nachfolgend wird die Erfindung anhand von Ausführungsbeispielen näher beschrieben, wozu zunächst je ein Beispiel für eine Reaktionsanordnung zur Ausübung des Verfahrens in einem Standgefäß und zur Ausübung im Reaktionsdrehrohr in je einer schematischen Figur vorgestellt werden.

Es zeigt

Fig. 1    eine Mikrowellen-Reaktionsanlage zur Herstellung von oxidischen Pulvern aus wäßrigen Nitratlösungen im quasi diskontinuierlich-kontinuierlichen Verfahren und

Fig. 2    einen Mikrowellen-Drehrohrofen zur Herstellung von oxidischen Pulvern aus wäßrigen Nitratlösungen im kontinuierlichen Verfahren.

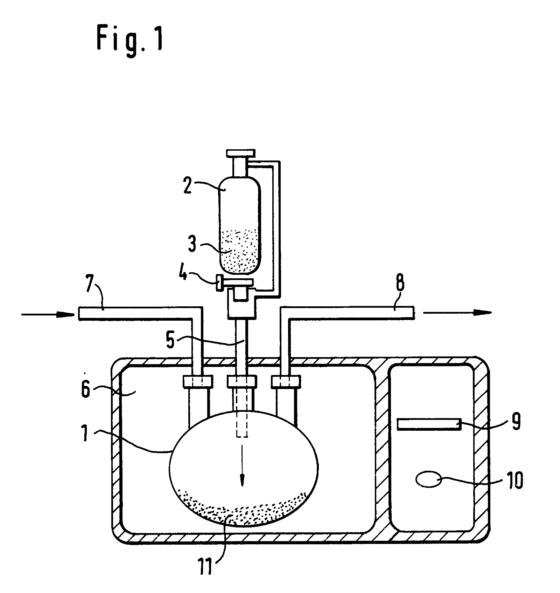

Die Vorrichtung gemäß Fig. 1 besteht aus einem Dreihalskolben 1 als Reaktionsgefäß mit einem Vorratsbehältnis 2 für die umzusetzende Metallnitratlösung 3, die über ein Regelventil 4 durch einen Zulauf 5 in dosierbarem Zugabestrom in das Reaktionsgefäß 1 zugegeben werden kann. In abgeänderter Anordnung (nicht gezeigt) läßt sich die Nitratlösung 3 in das Reaktionsgefäß 1 auch einspritzen oder einsprühen. Das Reaktionsgefäß 1 ist in einen Mikrowellenresonator 6 eingeordnet, durch dessen obere Abschirmung hindurchgeführt der Zulauf 5, eine Spülgaszuleitung 7 und eine Gasableitung 8 (gegebenenfalls mit - nicht gezeigter - nachgeschalteter Absaugpumpe) mit den Hälsen des Dreihalskolbens 1 verbunden sind. Mit den Einstelleinrichtungen 9 und 10 lassen sich die Leistung des (nicht gezeigten) Mikrowellengenerators und dessen Betriebszeit einstellen. Mit 11 ist das oxidische Reaktionsprodukt bezeichnet.

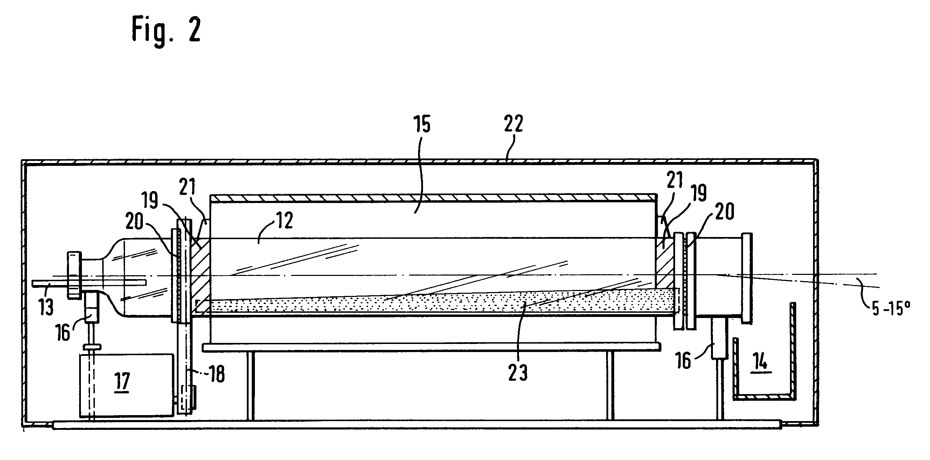

Die Vorrichtung gemäß Fig. 2, nämlich eine Mikrowellen-Reaktionsanlage zur kontinuierlichen Ausübung des Verfahrens gemäß der Erfindung, besteht in ihrem Kernstück aus einem drehbaren Reaktionsrohr 12, das beispielsweise aus Duran- oder Quarzglas gefertigt sein kann, in das eine Zulaufeinrichtung 13 zur Zugabe der umzusetzenden Nitrat- bzw. Mischnitratlösung 3 einmündet und das am entgegengelegenen Ende eine Auslaßeinrichtung 14 zum Auslassen und Sammeln des oxidischen Verfahrensproduktes aufweist. Das Reaktionsrohr 12 durchzieht einen Mikrowellenresonator 15, ist an jedem Ende auf einem Lager 16 gelagert und mittels eines Antriebsaggregats 17 bin Drehung versetzbar, wobei die Kraftübertragung beispielsweise mittels eines Treibriemens 18 erfolgt. Wenigstens eines der Lager 16 ist höhenverstellbar, um dem Reaktionsrohr 12 eine einstellbare Neigung von vorzugsweise 5 bis 15° zu geben. Zur Abschirmung der Mikrowellenstrahlung nach außen sind - bei der in der Figur gezeigten Ausführungsform - seitliche Metallabschirmungen 19 und weiter nach seitlich außen Metallgitter 20 vorgesehen, wobei das Gehäuse des Mikrowellenresonators 15 und die unmittelbar davor bzw. dahinter angeordneten Metallabschirmungen 19 mittels eines Schleifkontakts 21 leitend verbunden sind. Zur völligen Abschirmung von Mikrowellenstrahlung in die Umgebung empfiehlt sich, die gesamte Reaktionsanordnung mit einem strahlungseinschließenden Gehäuse 22 zu umgeben, das (nicht gezeigt) selbstverständlich schließbare Zugänge zur Reaktionsvorrichtung aufweist.

Wie weiter oben erläutert, kann das Reaktionsrohr 12 mit Mahlkörpern 23 beschickt sein, die einerseits während des Drehens des Reaktionsrohres 12 das entstandene oxidische Reaktionsprodukt in der Pulverform halten bzw. zur Pulverform konditionieren und andererseits eine energieübertragende Funktion entsprechend der des Metalloxidschwammes 11 ausüben können.

Versuch 1

Umsetzung eines Zn-Sb-Bi-Mn-Cr-Co-Mischnitrats zum Mischoxid unter Zusatz von Weinsäure (zur Herstellung einer Varistorkeramik)

Mit einer wie zu Fig. 1 beschriebenen Versuchsanordnung wurden bei einer Mikrowellenfrequenz von 2,45 GHz und einer Mikrowellenleistung von 1000 Watt etwa 1000 g Varistor-Pulver wie folgt hergestellt.

Die Ausgangslösung enthielt die nachfolgend angegebenen Substanzen und Substanzmengen als wäßrige Lösung; die Konzentration der Lösung betrug etwa 20 Gew.%, berechnet auf die Oxidform der gelösten Substanzen:

| | |
|---|---|
| $Zn(NO_3)_2 \times 6\,H_2O$ | 3158,3 g |
| $Sb_2O_3$ *) | 32,2 g |
| $Bi(NO_3)_3 \times 5\,H_2O$ | 160,9 g |
| $Mn(NO_3)_2 \times 4\,H_2O$ | 13,9 g |
| $Cr(NO_3)_3 \times 9\,H_2O$ | 44,3 g |
| $Co(NO_3)_2 \times 6\,H_2O$ | 48,3 g |

*) gelöst in einem Gemisch aus 125 g Weinsäure und 250 ml Wasser

# EP 0 483 654 A1

Von dieser Lösung wurden zunächst 100 ml im Reaktionskolben 1 vorgelegt und innerhalb von etwa 15 min unter dem Einfluß der Mikrowelleneinstrahlung bis zum Entstehen nitroser Gase zur Trockene eingeengt. Die Festsubstanztemperatur betrug etwa 300 °C. Dann wurde die restliche Lösung im Verlaufe von etwa 50 min zu dem gebildeten porösen Produktschwamm durch Zutropfen so zugegeben, daß das Lösungsmittel jeweils sofort verdampfte und das Schwammgebilde sich vergrößerte. 5 min nach Beendigung des Zulaufs an Nitratlösung wurde das Mikrowellenfeld abgeschaltet, anschließend das erkaltete poröse Schwammaterial entnommen und im Achatmörser zerdrückt. Das erhaltene feine Pulver konnte ohne weiteres plastifiziert, verpreßt und bei 1200 °C während 90 min zu einer Varistorkeramik gesintert werden.

Das gewonnene Pulver hatte im wesentlichen eine Korngröße von 2 $\mu$m (mit Abweichungen im Bereich von 0,5 bis 5 $\mu$m) und die in Tabelle 1 angegebene analytische Zusammensetzung (IST), der die theoretische Zusammensetzung (SOLL) gemäß des Reaktionsansatzes nachgestellt ist:

Tabelle 1

| Zusammensetzung des nach Versuch 1 erhaltenen Mischoxidpulvers in mol% | | | | | | |
|---|---|---|---|---|---|---|
| | ZnO | $Sb_2O_3$ | $Bi_2O_3$ | $MnO_2$ | $Cr_2O_3$ | $Co_3O_4$ |
| IST: | 86,31 | 3,20 | 7,65 | 0,40 | 0,87 | 1,42 |
| SOLL: | 86,39 | 3,22 | 7,73 | 0,43 | 0,88 | 1,33 |

Die thermogravimetrische Analyse (TGA) erwies, daß eine vollständige Umsetzung zu den Oxiden erfolgt ist. Der Gewichtsverlust der Proben betrug etwa 1 Gew.% bei 800 °C. Der Gewichtsverlust erfolgte kontinuierlich, beginnend ab etwa 50 °C, was auf an der Oberfläche adsorbierte Feuchtigkeit schließen läßt und eine nachträgliche Umwandlung von etwa nicht völlig zum Oxid umgesetzten Nitrat nicht anzeigt.

Die chemische Analyse von Proben des Produktes, die an unterschiedlichen Stellen (Oberfläche, Mitte, Tiefe) des Produktschwammes entnommen worden waren, zeigte, daß im Rahmen der Fehlerbreite des Analyseverfahrens sämtliche Proben dieselbe Zusammensetzung an den Dotierelementen hatten (Tabelle 2).

Tabelle 2

| Analyse verschiedener Proben einer Charge Die Werte wurden mittels Röntgenfluoreszenzanalyse (RFA) bestimmt | | | | | |
|---|---|---|---|---|---|
| Probennummer | Angaben in Atom-% | | | | |
| | Bi | Co | Cr | Mn | Sb |
| a | 0,42 | 0,49 | 0,43 | 0,37 | 0,86 |
| b | 0,42 | 0,44 | 0,40 | 0,37 | 0,84 |
| c | 0,37 | 0,44 | 0,41 | 0,37 | 0,81 |
| d | 0,40 | 0,43 | 0,41 | 0,37 | 0,83 |
| e | 0,43 | 0,46 | 0,39 | 0,37 | 0,81 |

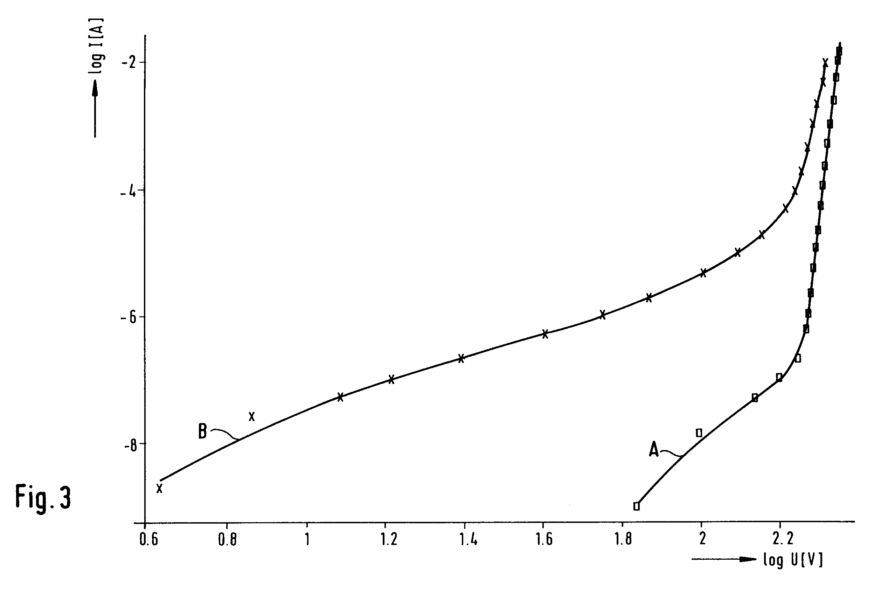

Die Leistungen der hergestellten Varistorkeramik ergeben sich aus Fig. 3 (Kurve A) im Vergleich zu einer konventionellen Varistorkeramik, die aus einem nach dem Mixed-Oxide-Verfahren gewonnenen, übereinstimmend zusammengesetzten Oxidpulver hergestellt worden ist (Kurve B).

Wie zu erkennen, liegen die Vorzüge der mit einem gemäß der Erfindung hergestellten Zinkoxidpulver erzeugten Varistorkeramik in der Ausbildung eines steileren und schärferen Knickverlaufes der Varistor-Kennlinie und im Auftreten geringerer und erst bei höherer Spannung auftretender Leckströme beim Einsatzpunkt. Die gegenüber dem Stand der Technik höheren Varistorqualitäten sprechen dafür, daß die mit Mischoxidpulvern gemäß der Erfindung hergestellten Zinkoxid-Varistoren sich durch eine höhere Konzentration an aktiven Korngrenzen auszeichnen als die aus konventionell erhaltenen Oxidpulvern erhaltbaren Varistoren. Mit dem erfindungsgemäß hergestellten Material werden dünner als konventionell ausgebildete Varistoren bzw. ein geringerer Materialverbrauch möglich.

Versuch 2

Herstellung von Yttrium-stabilisertem Zirkondioxid-Pulver

Mit einer wie in Fig. 1 beschriebenen Versuchsanordnung wurden bei einer Mikrowellenfrequenz von 2,45 GHz und einer Mikrowellenleistung von 1000 Watt eine salpetersaure Lösung von Zirkonoxicarbonat und Yttriumoxid ungesetzt, wobei die Zusammensetzung der Ausgangslösung etwa 90 mol% Zirkon und etwa 10 mol% Yttrium betrug und die Gewichtskonzentration einer auf die Oxide bezogenen, 20%igen Lösung entsprach.

Von dieser Lösung wurden zunächst etwa 100 ml im Reaktionskolben 1 vorgelegt und im Mikrowellenfeld bis zum Entstehen nitroser Gase erhitzt. Dabei bildete sich ein poröses Schwammaterial aus. Danach wurde weitere Ausgangslösung so zudosiert, daß einerseits die jeweils zugegebene Lösungsmenge innerhalb von Sekunden im Mikrowellenfeld ungesetzt und andererseits die Temperatur moderat gehalten wurde. Das erhaltene Reaktionsprodukt, ein insgesamt poröses Schwammaterial, ließ sich im Achatmörser zu einem äußerst feinen Pulver zerdrücken, dessen Kristalle Größen zwischen 0,5 und 2 $\mu$m aufwiesen. Die Produktzusammensetzung zeigt Tabelle 3.

Tabelle 3

| Zusammensetzung des nach Versuch 2 erhaltenen Yttrium-Zirkon-Oxidpulvers in mol% | | |
|---|---|---|
| | Zirkon | Yttrium |
| IST: | 90,34 | 9,70 |
| SOLL: | 90,23 | 9,77 |

Dilatometeruntersuchungen ließen erkennen, daß das Produktmaterial bereits bei einer Temperatur von etwa 700 bis 800 °C zu sintern beginnt. Das größte Sinterverhalten zeigte dieses Material im Bereich zwischen 1150 und 1250 °C. Bei einer Temperatur von etwa 1500 °C ist die Sinterung abgeschlossen. Hieraus zeigt sich, daß ein nach dem Verfahren gemäß der

Erfindung hergestelltes Yttrium-stabilisiertes Zirkondioxid im Vergleich zu konventionell hergestellten Pulvern, die Sintertemperaturen zwischen 1700 und 1900 °C erfordern, schon bei relativ niedrigen Temperaturen eine hohe Sinteraktivität aufzeigt.

Versuch 3

Herstellung von Yttrium-Barium-Kupfer-Oxidpulver (für ein daraus herzustellendes supraleitendes Material)

Mit einer wie zu Fig. 1 beschriebenen Versuchsanordnung wurde bei einer Mikrowellenfrequenz von 2,45 GHz und einer Mikrowellenleistung von 1000 Watt eine auf den Oxidgehalt berechnete 20%ige Lösung von $Y(NO_3)_2$, $Ba(NO_3)_2$ und $Cu(NO_3)_2$, die ein molares Mischungsverhältnis Y:Ba:Cu von 1:2:3 aufwies, umgesetzt.

In übereinstimmenden Versuchsansätzen wurden jeweils zunächst Lösungsmengen von 50 bis 100 ml in den Reaktionskolben 1 vorgelegt und mittels der Mikrowelleneinstrahlung bis zur Trockene eingeengt. Die Reaktionstemperatur betrug hierbei etwa 400 °C. Nach dem Entstehen erster Mengen an nitrosen Gasen, die abgesaugt wurden, wurde weitere Lösung zudosiert, bis etwa 250 g Produkt erhalten worden waren. Nachdem etwa für 15 min weiter mit Mikrowellen bestrahlt worden war, wurde ein schwarzes Yttrium-Barium-Kupfer-Oxidpulver entnommen, das nicht nachcalciniert zu werden brauchte. Das Material konnte in einem Mörser leicht zu einem feinen homogenen Pulver zerdrückt werden.

Das so erhaltene Pulver wurde anschließend zu Tabletten gepreßt und gesintert. Die Supraleiter-Eigenschaft dieses Materials ließ sich dadurch nachweisen, daß die Tabletten in flüssigen Stickstoff getaucht und über einem Ringmagneten zum Schweben gebracht wurden. Es kann daher vorausgesetzt werden, daß die Sprungtemperatur über der Temperatur des flüssigen Stickstoffs liegt.

Versuch 4

Herstellung eines Varistorpulvers im kontinuierlichen Mikrowellenreaktionsverfahren im Drehrohr

In einer Reaktionsanordnung gemäß Fig. 2 mit einem Drehrohr 12 aus Duranglas von 500 mm Länge und einem Innendurchmesser von etwa 80 mm wurden bei einer Mikrowellenfrequenz von 2,45 GHz und einer Mikrowellenleistung von 2 x 500 Watt ein Varistorpulver wie folgt hergestellt:

Von einer wie zu Versuch 1 zubereiteten Ausgangslösung wurden zunächst 500 bis 700 ml in das Reaktionsrohr 12 gegeben, dessen Drehzahl zwischen 15 und 30 min$^{-1}$ lag und das mit etwa 800 g Mahlkörpern (Kugeln) aus Aluminiumoxid beschickt war, und unter dem Einfluß der Mikrowelleneinstrahlung bis zum Entstehen nitroser Gase eingeengt. Die Temperatur der erhaltenen Festsubstanz lag bei etwa 400 °C. Danach wurde weitere Ausgangslösung kontinuierlich im Verlauf von etwa 100 min in der Weise dosiert zugegeben, daß das Lösungsmittel jeweils sofort verdampfte. Die Produkt-Trockensubstanz vermehrte sich, fiel durch die Drehbewegung des Reaktionsrohres 12 und der Mahlkörper 23 als feines Pulver an und wurde am Ende des Reaktionsrohres 12 kontinuierlich ausgetragen. Das so gewonnene reinoxidische pulverige Produkt wies im wesentlichen Korngrößen in Bereich von 1 bis 15 $\mu$m auf, wenngleich auch feinere Partikel enthalten waren. Das gewonnene Pulver wurde ohne weiteres plastifiziert, verpreßt und bei 1150 °C zu einer Varistorkeramik gesintert. Die elektrischen Werte der Varistorkeramik entsprachen denjenigen der Varistorkeramik gemäß Versuch 1.

**Patentansprüche**

1. Verfahren zur Herstellung von pulverförmigen Metalloxiden für keramische Massen aus den wäßrig bzw. in verdünnter Salpetersäure gelösten entsprechenden Metallnitraten durch Verdampfen des Lösungsmittels und thermische Zersetzung des Metallnitrats mittels Mikrowellen,
dadurch gekennzeichnet, daß man in einem Reaktionsgefäß (1; 12) Metallnitratlösung (3) vorlegt, mittels der Mikrowelleneinstrahlung das Lösungsmittel bis zum Entstehen nitroser Gase verdampft und unter Fortsetzung der Mlkrowelleneinstrahlung auf den gebildeten feinporösen Metalloxidschwamm (11) kontinuierlich weitere Metallnitratlösung (3) in der Weise zusetzt,
daß das Lösungsmittel sehr schnell verdampft und das Metallnitrat unter Fortbildung des Metalloxidschwamms sofort zum Metalloxid umgesetzt wird.

2. Verfahren nach Anspruch 1, dadurch gekennzeichnet, daß man als Metallnitratlösung (3) eine Mischmetallnitratlösung verwendet.

3. Verfahren nach Anspruch 1 oder 2, dadurch gekennzeichnet, daß man die Reaktionstemperatur über die zeitliche Zugabemenge an der Metallnitratlösung (3) steuert.

4. Verfahren nach einem der Ansprüche 1 bis 3, dadurch gekennzeichnet, daß man die Nitratlösung (3) mit einem Zusatz an einer kristallinen, im Lösungsmittel löslichen organischen Säure, vorzugsweise Weinsäure, zur Unterstützung der Ausbildung einer feinporösen Qualität des Metalloxidschwammes (11) verwendet.

5. Verfahren nach einem der Ansprüche 1 bis 4, dadurch gekennzeichnet, daß man die Umsetzung in einem drehbaren Reaktionsrohr (12) ausführt.

6. Verfahren nach Anspruch 5, gekennzeichnet durch die Anwendung von Mahlkörpern (23) in dem Drehrohr (12).

7. Verfahren nach Anspruch 6, gekennzeichnet durch die Anwendung von Mahlkörpern (23) aus einem gut mit den Mikrowellen in Wechselwirkung tretenden und sich dadurch unmittelbar erhitzenden Material.

8. Verfahren nach Anspruch 6, gekennzeichnet durch die Anwendung von Mahlkörpern (23) aus einem nicht oder schlecht mit den Mikrowellen in Wechselwirkung tretenden Material.

9. Verfahren nach Anspruch 6, gekennzeichnet durch die Anwendung eines Gemisches aus einerseits gut und andererseits schlecht mit den Mikrowellen in Wechselwirkung tretenden Mahlkörpern (23) zur Ausbildung eines Reaktionsbettes mit vorbestimmbarem Reaktionstemperaturniveau.

**10.** Verfahren nach Anspruch 6, gekennzeichnet durch die Anwendung von Mahlkörpern (23), die jeweils aus einem gut und aus einem schlecht mit den Mikrowellen in Wechselwirkung tretenden Material zusammengesetzt sind, zur Ausbildung eines Reaktionsbettes mit vorbestimmbarem Reaktionstemperaturniveau.

**11.** Verfahren nach einem der Ansprüche 7 bis 10, gekennzeichnet durch die Verwendung von Siliciumcarbid als gut und die Verwendung von Aluminiumoxid als schlecht mit den Mikrowellen in Wechselwirkung tretendem Material der Mahlkörper (23).

**12.** Vorrichtung zur Ausübung des Verfahrens gemäß einem der Ansprüche 5 bis 11, gekennzeichnet durch ein einen Mikrowellenresonator (15) durchlaufendes, drehbares Reaktionsrohr (12) aus einem mikrowellendurchlässigen Material mit Zulauf (13) für die Metallnitratlösung (3) und Auslaß (14) für das oxidische Reaktionsprodukt.

**13.** Vorrichtung nach Anspruch 12, gekennzeichnet durch metallische Einrichtungen (19, 20, 21) zur Strahlungsabschirmung an den Durchlässen des Mikrowellenresonators (15) für das Reaktionsrohr (12).

**14.** Vorrichtung nach Anspruch 12 oder 13, gekennzeichnet durch eine höhenverstellbare Einrichtung (16) zur Neigungseinstellung für das Reaktionsrohr (12).

**15.** Vorrichtung nach einem der Ansprüche 12 bis 14, gekennzeichnet durch einen Riemenantrieb (17, 18) für die Drehbewegung des Reaktionsrohres (12).

Fig.1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 348 384 (MASCHINENFABRIK ANDRITZ AG) <br> * Ansprüche 1-2 * <br> --- | 1, 12 | C01G1/02 |
| A | US-A-4 784 686 (MEEK ET AL) <br> * Beispiele 1-3 * <br> --- | 1 | |
| A | PATENT ABSTRACTS OF JAPAN <br> vol. 6, no. 49 (C-96)(927) 31. März 1982 <br> & JP-A-56 164 017 ( FUJI DENKI KAGAKU K.K. ) 16. Dezember 1981 <br> * Zusammenfassung * <br> --- | 1 | |
| A <br> D | FR-A-2 504 112 (TOKYO SHIBAURA DENKI K.K.) <br> * Anspruch 1 * <br> & US-A-4 444 723 <br> --- | 1, 12 | |
| A <br> D | GB-A-2 173 783 (UNITED STATES DEPARTMENT OF ENERGY) <br> * Anspruch 1 * <br> & DE-A-3 611 141 <br> --- | 1 | |
| A | DE-A-3 346 253 (DORYOKURO KAKUNENRYO KAIHATSU JIGYODAN) <br> * Anspruch 1 * <br> ----- | 12 | **RECHERCHIERTE SACHGEBIETE (Int. Cl.5)** <br><br> C01G |

Der vorliegende Recherchenbericht wurde für alle Patentansprüche erstellt

| Recherchenort | Abschlußdatum der Recherche | Prüfer |
|---|---|---|
| BERLIN | 13 FEBRUAR 1992 | Jean Paul Clement |

EPO FORM 1503 03.82 (P0403)